# EUROPÄISCHE PATENTSCHRIFT

(11) **EP 1 180 624 B1**
(45) Veröffentlichungstag und Bekanntmachung des Hinweises auf die Patenterteilung: **15.06.2005**
(21) Anmeldenummer: 01118111.2
(22) Anmeldetag: 26.07.2001
(51) Int. Cl.: F16K 1/52

(54) **Regulierventil mit Voreinstellung**
Control valve with pre-setting
Soupape de régulation avec préréglage

(30) Priorität: 16.08.2000 DE 20014155 U
(43) Veröffentlichungstag der Anmeldung: 20.02.2002
(73) Patentinhaber: Honeywell Technologies Sarl, 1110 Morges (CH)
(72) Erfinder: Pietsch, Jürgen, 59755 Arnsberg (DE)
(74) Vertreter: Fritz, Edmund Lothar, Dipl.-Chem.

(56) Entgegenhaltungen:
- BE-A- 539 282
- DE-A- 2 054 638
- DE-A- 3 231 298

## Beschreibung

Die vorliegende Erfindung betrifft ein Regulierventil mit Voreinstellung umfassend ein axial verstellbares mit einem Ventilsitz zusammenwirkendes Ventilverschlussstück sowie eine mit einem Ventiloberteil zusammenwirkende Voreinstelleinrichtung mittels derer ein Voreinstellquerschnitt für den Durchfluss eines Fluids veränderbar ist, wobei das Fluid zunächst in axialer Richtung bezogen auf die Bewegung des Ventilverschlussstücks einströmt und danach mindestens teilweise in radialer Strömung den Voreinstellquerschnitt durchströmt, wobei die Voreinstelleinrichtung als Drehschieber ausgebildet ist.

In der DE 89 11 899.5 U1 ist ein Thermostatventil beschrieben mit Voreinstelleinrichtung, bei dem in einem Ventiloberteil Querbohrungen ausgebildet sind und eine konzentrisch in dem Ventiloberteil angeordnete Voreinstelleinrichtung ein konisches Ende aufweist. Die Voreinstelleinrichtung ist dabei axial verschiebbar gegenüber dem Ventiloberteil und übersteuert bei dieser Verschiebung mit dem konischen Ende die Querbohrungen, wodurch sich der jeweils gewünschte Voreinstellquerschnitt ergibt.

Die DE 43 25 737 beschreibt ein Regulierventil mit Voreinstellung, welches für Armaturen von Kompaktheizkörpern eingesetzt wird. Bei diesem Regulierventil sind in der Voreinstelleinrichtung mehrere Durchflussbegrenzungsöffnungen vorgesehen, die mit Abstand über den Umfang angeordnet sind und deren Querschnitt jeweils zunimmt. Diese Durchflussbegrenzungsöffnungen werden durch Verdrehen der Voreinstelleinrichtung, die in diesem Fall quasi als Drehschieber ausgebildet ist, mit einer Durchflussöffnung in dem Ventiloberteil zur Deckung gebracht. Je nach Drehstellung der Voreinstelleinrichtung kommt also eine kleinere oder eine größere Durchflussbegrenzungsöffnung mit der Durchflussöffnung des Ventiloberteils zur Deckung. Die bohrungsartigen Durchflussbegrenzungsöffnungen mit unterschiedlichem Querschnitt in der Voreinstelleinrichtung liegen dabei bezogen auf ihren jeweiligen Mittelpunkt in gleicher axialer Höhe und der Durchflussquerschnitt in der jeweiligen Voreinstellung wird ausschließlich durch den Querschnitt der Durchflussbegrenzungsöffnung bestimmt. Dadurch ergibt sich eine schrittweise Vergrößerung des Durchflussquerschnitts in der jeweiligen Voreinstellposition.

Aus der DE 32 31 298 ist ein Ventil mit einer zweifachen Durchflussregelung der eingangs genannten Gattung bekannt. Die erste Regelung erfolgt über das Ventilverschlussstück, in diesem Fall ein Kegel, mittels Drehung einer Spindel, wodurch der Durchgang von einem Verbindungskanal eines Ventilgehäuses in einen Überströmkanal einer Einlage geöffnet wird. Die zweite Regelung, die als Voreinstellung dient, erfolgt durch die Verdrehung der Einlage in einer Muffe, wobei das Ventiloberteil (Einlage) eine spaltförmige Öffnung (Regelkanal) am Umfang aufweist, die sich nur über einen Teil des Umfangs des Ventiloberteils erstreckt. Das Verdrehen der Einlage verursacht eine Vergrößerung oder Verminderung des Durchganges vom Überströmkanal über den Regelkanal in einen Austrittskanal.

In der DE 20 54 638 A ist ein Drosselventil mit einem Ventilsitzkörper beschrieben, das einen Rohrstutzen mit in mehreren Ebenen angeordneten radialen Durchströmkanälen aufweist, welche mittels eines kolbenförmigen Absperrorgans im Rohrstutzen verstellt werden. Dieser Rohrstutzen wird derart schichtweise von drehbaren Hülsen mit radialen Durchströmkanälen umfasst, dass die hintereinander geschalteten Durchströmkanäle Drosselstellen bilden. Dadurch kann der Durchfluss des durchströmenden Mediums geregelt werden.

Ausgehend von dem in DE 32 31 298 genannten Stand der Technik besteht die Aufgabe der vorliegenden Erfindung darin, ein Regulierventil mit Voreinstellung der eingangs genannten Gattung zur Verfügung zu stellen, welches vielfältigere Möglichkeiten bei der Voreinstellung bietet.

Die Lösung dieser Aufgabe liefert ein erfindungsgemäßes Regulierventil mit Voreinstellung der eingangs genannten Gattung mit den kennzeichnenden Merkmalen des Hauptanspruchs. Erfindungsgemäß ist vorgesehen, dass das Ventiloberteil wenigstens zwei axial versetzte spaltförmige Öffnungen am Umfang aufweist, die sich nur über jeweils einen Teil des Umfangs des Ventiloberteils erstrecken. Das Ventiloberteil ist in der Regel das äußere Teil, welches konzentrisch die Voreinstelleinrichtung aufnimmt. Anders als dies im Stand der Technik auch bei den Regulierventilen der Fall ist, bei denen die Voreinstelleinrichtung als Drehschieber ausgebildet ist, weist das Ventiloberteil erfindungsgemäß wenigstens zwei spaltförmige Öffnungen auf, die axial sowie über den Umfang versetzt zueinander angeordnet sind. Durch diese Anordnung der Öffnungen ist der Durchfluss des Ventils insbesondere bei maximalem Durchfluss weitgehend unabhängig von der Stellung des Ventiloberteils im Ventilgehäuse. Auch bei kompaktem Ventilgehäuse, das bei ungünstiger Stellung des Oberteils dessen Abströmöffnung abdeckt, ist eine der Öffnungen im Ventiloberteil dem Abströmstutzen des Ventilgehäuses zugewandt. Durch den axialen Versatz der Öffnungen im Ventiloberteil ist es möglich, die Voreinstelleinrichtung so zu gestalten, dass diese die zueinander versetzten Öffnungen im Ventiloberteil nach beispielsweise einer Drehung um 180° entsprechend einer minimalen Voreinstellung abdeckt.

Dadurch, dass weiterhin vorzugsweise die Voreinstelleinrichtung wenigstens eine spaltförmige Öffnung aufweist, die sich nur über einen Teil deren Umfang erstreckt, können durch Verdrehen der Voreinstelleinrichtung die Öffnungen des Ventiloberteils mit der Öffnung der Voreinstelleinrichtung über einen mehr oder weniger großen Umfangsbereich zur Deckung gebracht werden. Dies ermöglicht es, den Durchflussquerschnitt bei Verwendung spaltförmiger Öffnungen je nach Maß der Überdeckung der jeweiligen Spalte in Voreinstelleinrichtung und Ventiloberteil praktisch kontinuierlich zu verändern. Dies ist vorteilhaft gegenüber vorbekannten Lösungen der eingangs beschriebenen Art, bei denen immer jeweils eine konkrete bohrungsartige Öffnung in der Voreinstelleinrichtung mit einer einzigen Öffnung im Ventiloberteil zur Deckung gebracht wird, so dass der Durchfluss durch den Querschnitt der inneren Bohrung in der Voreinstelleinrichtung bestimmt wird. Erfindungsgemäß bestimmt dagegen das Maß der Überlappung den Durchflussquerschnitt, wobei durch Verwendung zweier spaltförmiger Öffnungen im Ventiloberteil der Durchflussquerschnitt entsprechend vergrößert werden kann.

Eine bevorzugte Weiterbildung der Erfindung sieht vor, dass das Ventiloberteil weiterhin wenigstens eine weitere radiale Bohrung mit relativ geringem Querschnitt und/oder wenigstens eine weitere achsparallele Bohrung mit relativ geringem Querschnitt aufweist, die jeweils in einer vorgegebenen Verdrehstellung der Voreinstelleinrichtung geöffnet sind, wobei dann vorzugsweise die genannten spaltförmigen Öffnungen im Ventiloberteil geschlossen sind. Diese Stellung entspricht in der Regel der minimalen Voreinstellung, bei der dann der Durchfluss durch diese eine oder mehreren exakt herstellbaren radialen und/oder achsparallelen Öffnungen im Ventiloberteil bestimmt wird.

Ein weiterer Vorteil der erfindungemäßen Ausbildung des Regulierventils besteht darin, dass beispielsweise durch eine volle Drehung der Voreinstelleinrichtung alle Kanten der den Durchfluss bestimmenden Öffnungen abgestreift und somit gereinigt werden. Dadurch werden sich in Flussrichtung vor der Öffnung befindliche Verunreinigungen beim Drehvorgang der Voreinstelleinrichtung zu der sich dann bildenden größeren Öffnung geschoben und ausgespült. Die erfindungsgemäße Ausbildung unter Verwendung von Ringspalten am Umfang des Ventiloberteils macht das Ventil auch weniger anfällig gegen das sich Festsetzen von Verunreinigungen, denn bereits bei relativ geringer Überdeckung der jeweiligen spaltförmigen Öffnungen wird der Durchflussquerschnitt bestimmt durch die relativ große axiale Höhe, die der Ringspalt aufweisen kann. Wird dagegen eine Voreinstelleinrichtung mit einer Konusfläche axial gegen ein Ventiloberteil bewegt, wie im Stand der Technik, ergibt sich bei relativ kleiner Voreinstellung ein relativ schmaler Ringspalt für den Durchfluss, so dass sich dort Verunreinigungen festsetzen können.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: ein erfindungsgemäßes Regulierventil mit maximaler Voreinstellung im Längsschnitt;
- Fig. 2: einen Querschnitt durch das Regulierventil von Figur 1 entlang der Schnittlinie A B;
- Fig. 3: einen Querschnitt durch das erfindungsgemäße Regulierventil bei maximaler Voreinstellung entlang der Schnittlinie C D von Figur 1;
- Fig. 4: einen ähnlichen Querschnitt wie in Figur 2 jedoch bei einer anderen Einstellung mit mittlerem Durchfluss;
- Fig. 5: einen ähnlichen Querschnitt wie in Figur 3, jedoch bei einer anderen Einstellung mit mittlerem Durchfluss;
- Fig. 6: einen Längsschnitt durch das Regulierventil bei minimaler Voreinstellung;
- Fig. 7: einen entsprechenden Querschnitt durch das Regulierventil entlang der Linie E F von Figur 6;
- Fig. 8: eine Schnittdarstellung der Voreinstelleinrichtung 13;
- Fig. 9: eine Schnittdarstellung durch das Ventiloberteil 12.

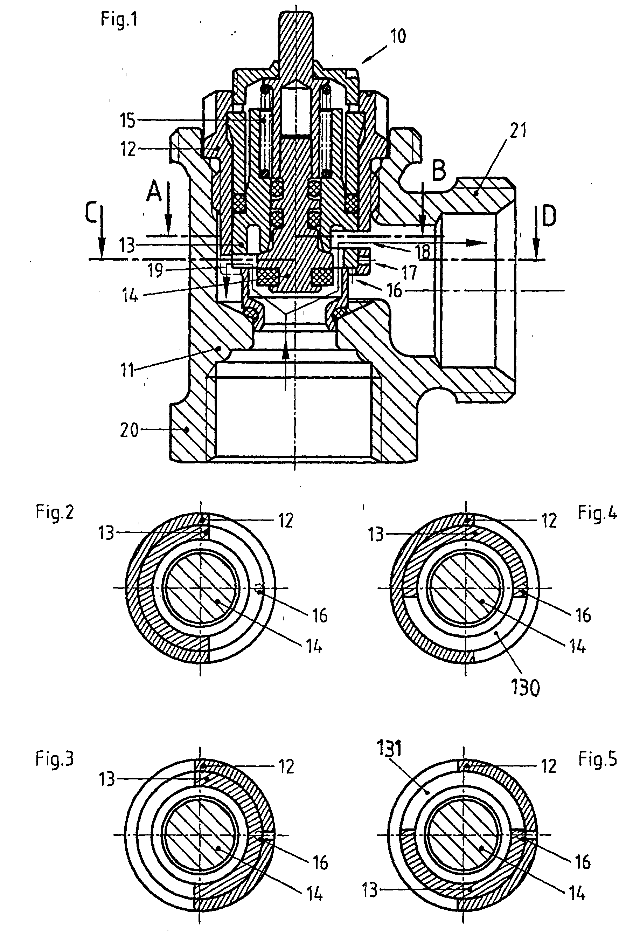

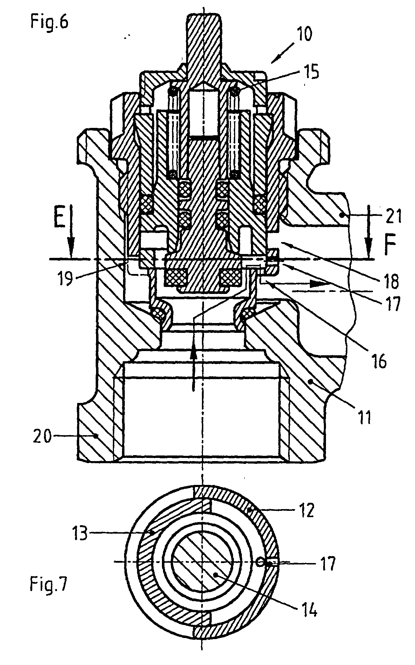

In Figur 1 ist ein erfindungsgemäßes Regulierventil 10 gezeigt bei maximaler Voreinstellung. Der gleichen Voreinstellung entsprechen die beiden Querschnittszeichnungen gemäß Figur 2 und Figur 3. Die Figuren 4 und 5 zeigen Einstellungen mit einem mittleren Durchfluss, wohingegen die Figuren 6 und 7 jeweils Einstellungen bei kleinstem Durchfluss also minimaler Voreinstellung wiedergeben.

Das erfindungsgemäße Regulierventil 10 verfügt über ein Ventilgehäuse 11 mit Zulaufstutzen 20 und Ablaufstutzen 21. In das Ventilgehäuse 11 ist ein Oberteil 12 metallisch dichtend eingeschraubt, wobei das Oberteil 12 eine Einstelleinrichtung 13 aufnimmt. Die Einstelleinrichtung 13 umfasst einen Schließkörper 14, der abhängig vom Druck des durch den Zulaufstutzen 20 anströmenden Fluids gegen die Federkraft eines Federelements 15 bewegt wird. Durch Verschieben des Schließkörpers 14 in axialer Richtung wird demnach der Durchfluss durch das Regulierventil 10 geregelt. Beim Aufsitzen des Schließkörpers 14 auf dem Oberteil 12 ist der Durchfluss durch das Regulierventil 10 abgesperrt.

Die Einstelleinrichtung 13 dient der Voreinstellung des Durchflusses durch das Regulierventil 10. Erfindungsgemäß sind der Einstelleinrichtung 13 eine erste Öffnung 18 sowie eine zweite Öffnung 19 mit veränderbarem Durchflussquerschnitt zugeordnet. Durch Verdrehen der Einstelleinrichtung 13 ist der Durchflussquerschnitt der ersten Öffnung 18 sowie der zweiten Öffnung 19 veränderbar.

Erfindungsgemäß ist die zweite Öffnung 19 zur ersten Öffnung 18 axial sowie über den Umfang versetzt angeordnet. Gemäß Figur 1 ist die zweite Öffnung 19 zur ersten Öffnung 18 um 180° umfangsversetzt positioniert. Durch diese versetzte Anordnung der zweiten Öffnung 19 gegenüber der ersten Öffnung 18 ist der Durchfluss durch das Regulierventil 10 insbesondere bei maximalem Durchfluss weitgehend unabhängig von der Stellung des Oberteils 12 im Ventilgehäuse 11. Auch bei einer kompakten Ausgestaltung des Ventilgehäuses 11, welches bei ungünstiger Stellung des Oberteils 12 die zweite Öffnung 19 verdecken würde, ist die um 180° versetzte erste Öffnung 18 dem Ablaufstutzen 21 des Ventilgehäuses 11 zugewandt.

Durch den axialen Versatz der Öffnungen 18, 19 zueinander ist es möglich, die Einstelleinrichtung 13 so auszugestalten, dass dieselbe die Öffnungen 18, 19 nach einer 180°-Drehung verdeckt, um eine Voreinstellung mit minimalem Durchfluss zu gewährleisten (siehe Figuren 6, 7). In dem Fall mit minimaler Durchflussvoreinstellung sind demnach die erste Öffnung 18 und die zweite Öffnung 19 verschlossen. Das Fluid kann dann nur noch durch dritte Öffnungen 16, 17 in den Ablaufstutzen 21 gelangen.

Ein weiterer Vorteil des erfindungsgemäßen Regulierventils 10 besteht darin, dass bei minimaler Voreinstellung (siehe Figuren 6, 7) die Anordnung der in diesem Fall den Durchfluss bestimmenden Öffnungen 16, 17 unabhängig von der Einstelleinrichtung 13 ist. Der Durchfluss bei minimaler Voreinstellung wird durch eine oder mehrere exakt herstellbare Öffnungen 16, 17 bestimmt, die hinsichtlich ihres Durchflusses unabhängig vom Einstellwinkel der Einstelleinrichtung 13 sind.

Ferner verfügt das erfindungsgemäße Regulierventil 10 über eine Reinigungsfunktion. Bei einer 360°-Drehung der Einstelleinrichtung 13 werden alle Kanten der den Durchfluss bestimmenden Öffnungen 16, 17, 18 und 19 abgestreift und somit gereinigt. Verunreinigungen, die sich in Flussrichtung vor den Öffnungen 16, 17, 18 und 19 befinden, werden bei diesem Drehvorgang der Einstelleinrichtung 13 zu der sich ausbildenden größeren Öffnung geschoben und ausgespült.

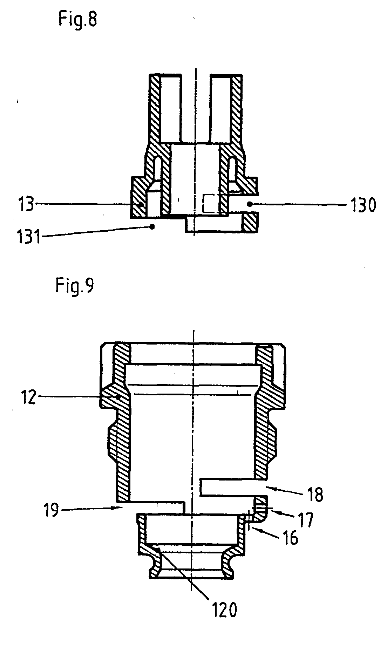

Der Strom des Fluids durch das erfindungsgemäße Regulierventil 10 bei maximaler Voreinstellung wird in Fig. 1 durch die Pfeile verdeutlicht. Wie man sieht, strömt das Fluid durch den Zulaufstutzen 20 ein und gelangt aufgrund des geöffneten Schließkörpers 14 in einen Ringkanal, von dem aus es dann durch die ringspaltartige Öffnung 19 einerseits und durch die axial darüber liegende ringspaltartige Öffnung 18 radial nach außen strömt, so dass es dann schließlich in den Ablaufstutzen 21 gelangt. Wie man sieht sind die beiden kleinen Öffnungen 16, 17 in diesem Fall durch die Voreinstelleinrichtung 13 verschlossen. Der obere Querschnitt gemäß Fig. 2 verdeutlicht, dass in dieser maximalen Voreinstellposition die axial obere Öffnung 18 im Prinzip einen Ringspalt von annähernd 180° am Umfang freigibt, wobei die Höhe des Ringspalts 18, die sich aus Fig. 1 ergibt, ausreichend ist, um ein Verschließen durch Verunreinigungen zu verhindern. Fig. 3 zeigt den unteren Querschnitt in Höhe der umfangsspaltartigen Öffnung 19 des Ventiloberteils 12. Diesbezüglich wird auch auf die Einzelteilzeichnung des Ventiloberteils gemäß Fig. 9 verwiesen.

Aus der Position gemäß den Fig. 2 und 3 wird nun die Voreinstelleinrichtung 13, die für sich als Einzelteil noch einmal in Fig. 8 dargestellt ist, um 90° im Uhrzeigersinn gedreht in eine mittlere Voreinstellposition. Wie man aus Fig. 4 entnimmt, ist nun die spaltförmige Öffnung 130 der Voreinstelleinrichtung 13 immer noch über einen Umfangsbereich von annähernd 90° in Überdeckung mit der Öffnung 18 des Ventiloberteils 12. Ebenso ist wie sich aus Fig. 5 ergibt, die sich über einen Teil des Umfangs der Voreinstelleinrichtung 13 erstreckende Aussparung 131 (siehe auch Fig. 8) mit der Öffnung 19 des Ventiloberteils 12 etwa noch über einen Umfangsbereich von annähernd 90° in Überdeckung.

Dreht man nun die Voreinstelleinrichtung 13 um weitere 90°, das heißt um insgesamt 180° im Uhrzeigersinn ausgehend von der Position gemäß Fig. 2, in die Position nach Fig. 7, die der minimalen Voreinstellposition entspricht, dann ist die Aussparung 131 vollkommen durch das Ventiloberteil 12 abgedeckt bis auf die kleine radiale Öffnung 17 (siehe auch Fig. 6) bzw. die kleine achsparallele Öffnung 16, durch die dann das Fluid gemäß dem eingezeichneten Pfeil in Fig. 6 in den Ablaufstutzen 21 strömen kann.

## Patentansprüche

1. Regulierventil (10) mit Voreinstellung umfassend ein axial verstellbares mit einem Ventilsitz (120) zusammenwirkendes Ventilverschlussstück (14) sowie eine mit einem Ventiloberteil (12) zusammenwirkende Voreinstelleinrichtung (13) mittels derer ein Voreinstellquerschnitt für den Durchfluss eines Fluids veränderbar ist, wobei das Fluid zunächst in axialer Richtung bezogen auf die Bewegung des Ventilverschlussstücks (14) einströmt und danach mindestens teilweise in radialer Strömung den Voreinstellquerschnitt durchströmt, wobei die Voreinstelleinrichtung (13) als Drehschieber ausgebildet ist, **dadurch gekennzeichnet, dass** das Ventiloberteil (12) wenigstens zwei axial zueinander versetzte spaltförmige Öffnungen (18, 19) am Umfang aufweist, dass die Öffnungen (18, 19) zueinander umfangsversetzt angeordnet sind und dass die Öffnungen (18, 19) sich nur jeweils über einen Teil des Umfangs des Ventiloberteils (12) erstrecken.

2. Regulierventil nach Anspruch 1, **dadurch gekennzeichnet, dass** die Voreinstelleinrichtung (13) wenigstens eine spaltförmige Öffnung (130) aufweist, die sich nur über einen Teil deren Umfang erstreckt.

3. Regulierventil nach Anspruch 1 oder 2, **dadurch gekennzeichnet, dass** durch Verdrehen der Voreinstelleinrichtung (13) die Öffnungen (18, 19) des Ventiloberteils (12) mit der Öffnung (130) der Voreinstelleinrichtung (13) über einen mehr oder weniger großen Umfangsbereich zur Deckung bringbar sind.

4. Regulierventil nach einem der Ansprüche 1 bis 3, **dadurch gekennzeichnet, dass** das Ventiloberteil (12) wenigstens eine weitere radiale Bohrung (17) mit relativ geringem Querschnitt aufweist, die in wenigstens einer Verdrehstellung der Voreinstelleinrichtung (13) geöffnet ist.

5. Regulierventil nach einem der Ansprüche 1 bis 4, **dadurch gekennzeichnet, dass** das Ventiloberteil (12) wenigstens eine weitere achsparallele Bohrung (16) mit relativ geringem Querschnitt aufweist, die in einer vorgegebenen Verdrehstellung geöffnet ist.

6. Regulierventil nach einem der Ansprüche 1 bis 5, **dadurch gekennzeichnet, dass** die Öffnung (16) und/oder die Öffnung (17) bei minimalem Voreinstellquerschnitt geöffnet sind.

7. Regulierventil nach einem der Ansprüche 1 bis 6, **dadurch gekennzeichnet, dass** die Öffnungen (18) und/oder (19) Umfangsspalte in ringförmigen Abschnitten des Ventiloberteils (12) sind, die sich über annähernd den halben Umfang erstrecken.

8. Regulierventil nach einem der Ansprüche 1 bis 7, **dadurch gekennzeichnet, dass** der Ventilsitz (120) für das Ventilverschlussstück (14) in dem Ventiloberteil (12) in Strömungsrichtung vor den Öffnungen (18, 19) gebildet ist.

9. Regulierventil nach einem der Ansprüche 1 bis 8, **dadurch gekennzeichnet, dass** die Voreinstelleinrichtung (13) eine sich über einen Teil des Umfangs erstreckende Aussparung (131) aufweist, die der Öffnung (19) zugeordnet ist.

10. Regulierventil nach einem der Ansprüche 1 bis 9, **dadurch gekennzeichnet, dass** sich der Umfangsspalt (130) der Voreinstelleinrichtung (13) über annähernd 180° des Umfangs erstreckt.

## Claims

1. Regulating valve (10) with presetting, comprising an axially adjustable valve-closing piece (14) cooperating with a valve seat (120), and also a presetting device (13) which cooperates with a valve upper part (12) and by means of which a preset cross section for the throughflow of a fluid can be varied, the fluid first flowing in the axial direction with respect to the movement of the valve-closing piece (14) and thereafter flowing through the preset cross section at least partially in a radial flow, the presetting device (13) being designed as a rotary slide, **characterized in that** the valve upper part (12) has on the circumference at least two gap-shaped orifices (18, 19) offset axially with respect to one another, **in that** the orifices (18, 19) are arranged so as to be circumferentially offset with respect to one another, and **in that** the orifices (18, 19) extend in each case only over part of the circumference of the valve upper part (12).

2. Regulating valve according to Claim 1, **characterized in that** the presetting device (13) has at least one gap-shaped orifice (130) which extends only over part of the circumference of the said presetting device.

3. Regulating valve according to Claim 1 or 2, **characterized in that**, as a result of the rotation of the presetting device (13), the orifices (18, 19) of the valve upper part (12) can be brought into congruence with the orifice (130) of the presetting device (13) over a greater or lesser circumferential region.

4. Regulating valve according to one of Claims 1 to 3, **characterized in that** the valve upper part (12) has at least one further radial bore (17) of relatively small cross section, which is opened in at least one rotary position of the presetting device (13).

5. Regulating valve according to one of Claims 1 to 4, **characterized in that** the valve upper part (12) has at least one further axially parallel bore (16) of relatively small cross section, which is opened in a predetermined rotary position.

6. Regulating valve according to one of Claims 1 to 5, **characterized in that** the orifice (16) and/or the orifice (17) are opened in the case of a minimum preset cross section.

7. Regulating valve according to one of Claims 1 to 6, **characterized in that** the orifices (18) and/or (19) are circumferential gaps which are located in annular portions of the valve upper part (12) and which extend over approximately half the circumference.

8. Regulating valve according to one of Claims 1 to 7, **characterized in that** the valve seat (120) for the valve-closing piece (14) is formed, upstream of the orifices (18, 19) in the direction of flow, in the valve upper part (12).

9. Regulating valve according to one of Claims 1 to 8, **characterized in that** the presetting device (13) has a clearance (131) which extends over part of the circumference and which is assigned to the orifice (19).

10. Regulating valve according to one of Claims 1 to 9, **characterized in that** the circumferential gap (130) of the presetting device (13) extends over approximately 180° of the circumference.

## Revendications

1. Soupape de régulation (10) avec préréglage, comprenant un élément de fermeture de soupape (14) mobile axialement, coopérant avec un siège de soupape (120) ainsi qu'un dispositif de préréglage (13) coopérant avec une partie supérieure de soupape (12), au moyen duquel une section transversale de préréglage pour le débit d'un fluide peut être modifiée, le fluide affluant d'abord dans la direction axiale par rapport au déplacement de l'élément de fermeture de soupape (14) puis parcourant au moins en partie dans un écoulement radial la section transversale de préréglage, le dispositif de préréglage (13) étant réalisé sous la forme d'un tiroir rotatif, **caractérisée en ce que** la partie supérieure de soupape (12) présente au moins deux ouvertures (18, 19) en forme de fente, décalées axialement l'une par rapport à l'autre sur la périphérie, **en ce que** les ouvertures (18, 19) sont disposées de manière décalée sur la périphérie l'une par rapport à l'autre et **en ce que** les ouvertures (18, 19) s'étendent seulement à chaque fois sur une partie de la périphérie de la partie supérieure de soupape (12).

2. Soupape de régulation selon la revendication 1, **caractérisée en ce que** le dispositif de préréglage (13) présente au moins une ouverture en forme de fente (130) qui s'étend seulement sur une partie de sa périphérie.

3. Soupape de régulation selon la revendication 1 ou 2, **caractérisée en ce que** l'on peut amener en coïncidence les ouvertures (18, 19) de la partie supérieure de soupape (12) avec l'ouverture (130) du dispositif de préréglage (13) sur une plage de la périphérie plus ou moins grande, par rotation du dispositif de préréglage (13).

4. Soupape de régulation selon l'une quelconque des revendications 1 à 3, **caractérisée en ce que** la partie supérieure de soupape (12) présente au moins un alésage radial supplémentaire (17) de section transversale relativement petite, qui est ouvert dans au moins une position de rotation du dispositif de préréglage (13).

5. Soupape de régulation selon l'une quelconque des revendications 1 à 4, **caractérisé en ce que** la partie supérieure de soupape (12) présente au moins un alésage supplémentaire d'axe parallèle (16) de section transversale relativement petite, qui est ouvert dans une position de rotation prédéfinie.

6. Soupape de régulation selon l'une quelconque des revendications 1 à 5, **caractérisée en ce que** l'ouverture (16) et/ou l'ouverture (17) sont ouvertes pour une section transversale de préréglage minimale.

7. Soupape de régulation selon l'une quelconque des revendications 1 à 6, **caractérisée en ce que** les ouvertures (18) et/ou (19) sont des fentes périphériques dans des sections annulaires de la partie supérieure de soupape (12), qui s'étendent sur approximativement la moitié de la périphérie.

8. Soupape de régulation selon l'une quelconque des revendications 1 à 7, **caractérisée en ce que** le siège de soupape (120) pour l'élément de fermeture de soupape (14) est formé dans la partie supérieure de soupape (12) dans la direction de l'écoulement avant les ouvertures (18, 19).

9. Soupape de régulation selon l'une quelconque des revendications 1 à 8, **caractérisée en ce que** le dispositif de préréglage (13) présente un évidement (131) s'étendant sur une partie de la périphérie, qui est associé à l'ouverture (19).

10. Soupape de régulation selon l'une quelconque des revendications 1 à 9, **caractérisée en ce que** la fente périphérique (130) du dispositif de préréglage (13) s'étend sur approximativement 180° de la périphérie.
